# FASCICULE DE BREVET EUROPEEN

(11) **EP 0 441 676 B1**
(45) Date de publication et mention de la délivrance du brevet: **05.06.1996**
(21) Numéro de dépôt: 91400199.5
(22) Date de dépôt: 29.01.1991
(51) Int. Cl.: G02B 6/38

(54) **Connecteur pour fibres optiques**
Stecker für optische Fasern
Connector for optical fibres

(30) Priorité: 29.01.1990 FR 9000994
(43) Date de publication de la demande: 14.08.1991
(73) Titulaire: RADIALL Société anonyme dite:, 93116 Rosny sous Bois (FR)
(72) Inventeur: Boillot, Laurent, F-38500 Voiron (FR); Boudard, Serge, F-93250 Villemonble (FR)
(74) Mandataire: Leszczynski, André

(56) Documents cités:
- EP-A- 0 063 085
- EP-A- 0 142 055
- FR-A- 2 386 060
- GB-A- 2 056 705
- GB-A- 2 138 161

## Description

La présente invention est relative à un connecteur pour fibres optiques.

Plus précisément, l'invention a pour objet un connecteur du type comportant deux embouts montés à l'extrémité de chacune des fibres à connecter et comportant chacun un conduit dans lequel la fibre optique peut être introduite à jeu et immobilisée de manière que son extrémité coïncide avec l'extrémité de l'embout, un raccord femelle de reconstitution comportant un perçage longitudinal pour supporter et aligner les deux embouts face à face, et des moyens de pression longitudinaux pour repousser chacun des embouts en direction de l'autre.

La société déposante a déjà décrit dans EP-A-0063085 un connecteur de ce type dans lequel le raccord femelle comporte, dans sa partie centrale, à l'intérieur de son perçage longitudinal, un corps de butée pour les embouts mâles, notamment une sphère, présentant un orifice axial traversant et autour de celui-ci une portée de contact en regard de chacun des embouts mâles. Chacun des embouts mâles présente une protubérance tubulaire axiale susceptible de s'engager dans l'orifice du corps de butée, l'extrémité de la fibre coïncidant avec l'extrémité de la protubérance. Chacun des embouts comporte, en retrait de la protubérance, et entourant la partie arrière de celle-ci, un évidement annulaire dont la paroi, de préférence de profil conique, définit une portée de contact avec la portée en regard du corps de butée du raccord femelle, et un appui de portées en contact étant réalisé sous l'action de moyens de pression longitudinaux. Les portées en regard du corps de butée et des embouts mâles sont agencées de façon telle que, lors de tout mouvement relatif des portées en contact, l'extrémité d'une fibre, au niveau de la face d'extrémité de la protubérance d'un embout mâle, soit maintenue à une distance constante prédéterminée du centre du corps de butée.

Les faces d'extrémité des protubérances des embouts et des fibres immobilisées à l'intérieur sont droites, c'est-à-dire perpendiculaires à l'axe longitudinal du connecteur ou peuvent être inclinées par rapport à cet axe lorsqu'une fonction d'atténuation est recherchée comme décrit par exemple dans la demande de brevet français FR-A-2598820 de la société déposante.

Dans tous les cas, les faces d'extrémité des fibres en regard ne sont pas au contact l'une de l'autre mais sont séparées par un intervalle qui, dans la pratique, est de l'ordre de 6 à 15 µm une fois la connexion réalisée. En effet un intervalle plus grand, notamment supérieur à 25 µm, entraînerait des pertes inacceptables à la connexion.

Il existe donc une lame d'air entre les extrémités des fibres optiques en regard.

Or, l'indice de réfraction de l'air diffère assez sensiblement de celui du coeur des fibres optiques en silice actuellement utilisées qui présentent un indice de réfraction de 1,47.

Afin d'éviter les pertes de Fresnel par réflexion au passage de la lame d'air entre les extrémités des fibres en regard, il est connu de remplir l'espace entre les extrémités des fibres en regard à l'aide d'un produit à consistance de graisse ou de gel dit "gel d'indice" présentant un indice de réfraction égal ou voisin de celui du coeur des fibres. Un exemple en est donné dans GB-A-2056705.

Dans des connecteurs du type de celui décrit dans EP-A-0063085, avant de mettre en place les embouts à l'intérieur du raccord femelle, on dispose sur la face d'extrémité de l'embout sur laquelle débouche la fibre une faible quantité du gel d'indice, après quoi l'on immobilise les embouts dans le raccord femelle.

Cette solution n'est pas satisfaisante car, d'une part dans la pratique il arrive que le technicien réalisant la connexion omette de mettre en place le gel d'indice, et d'autre part le gel à tendance à s'évaporer en cours d'utilisation. De plus, lorsque la connexion doit être démontée puis remontée il est nécessaire de nettoyer les faces d'extrémité des embouts de manière à retirer le gel restant puis de remettre en place une nouvelle quantité de gel.

Dans tous les cas, il n'est pas possible de contrôler la quantité de gel d'indice mise en place.

Par ailleurs, FR-A-2 386 060 divulgue un connecteur de fibres optiques conforme au préambule de la revendication 1.

Dans ce document, l'élément en matière plastique élastique, au sens de l'invention, est constitué par un tampon cylindrique qui présente une longueur très supérieure au diamètre du coeur de la fibre.

Il résulte de cette grande longueur du tampon une mauvaise transmission du signal optique véhiculé par les fibres.

GB-A-2 056 705 décrit un connecteur de fibres optiques comprenant un tube capillaire dans lequel les extrémités de deux fibres optiques se rejoignent en alignement l'une de l'autre, avec leurs faces terminales en regard.

Une pastille d'une résine adaptatrice d'indice est prévue entre les faces terminales des fibres en regard pour protéger la face terminale de chaque fibre d'une détérioration par déchirure, par exemple.

En pratique, d'après ce document, une pastille est formée sur la face terminale de chaque fibre optique à connecter.

Il est donc nécessaire de préparer spécifiquement la face terminale de chaque fibre optique à connecter.

La présente invention vise à proposer un moyen simple et fiable pour raccorder les faces terminales en regard de deux fibres optiques à connecter, ce moyen permettant une bonne transmission du signal lumineux véhiculé par les fibres optiques, et ne nécessitant pas de préparation spécifique de la face terminale des fibres optiques à connecter.

Cet objectif est atteint par le connecteur pour fibres optiques tel que défini dans la revendication 1.

En d'autres termes, selon l'invention, le moyen pour raccorder les faces terminales des fibres est constitué par une membrane et un manchon solidaire de cette membrane, prévu autour de cette dernière, pour la maintenir à l'intérieur du perçage, dans sa position d'utilisation, même lorsque les fibres optiques ne sont plus engagées dans ledit perçage longitudinal.

Ainsi, selon l'invention l'on peut mettre en place le manchon comportant la membrane et l'immobiliser a l'intérieur du raccord femelle avant de réaliser la connexion. On introduit ensuite et on immobilise les embouts contenant les fibres à l'intérieur dudit raccord femelle.

Sous l'effet des moyens de pression longitudinaux des embouts dans le raccord femelle, la membrane selon l'invention se trouve écrasée entre les faces d'extrémité des embouts, remplissant ainsi complètement l'espace entre les fibres en regard et assurant une continuité en ce qui concerne l'indice de réfraction.

De préférence, la membrane est réalisée en élastomère silicone.

Avantageusement, le manchon comportant la membrane est agencé pour pouvoir être monté à emmanchement dur dans le perçage longitudinal du raccord femelle ou, dans un mode particulier de réalisation, dans l'orifice axial d'un corps de butée logé dans ledit perçage et dans lequel sont introduites les protubérances des embouts avec l'extrémité desquelles coïncident les extrémités des fibres.

A cet effet, la paroi extérieure du manchon présente avantageusement une section convexe, incurvée ou biconique.

D'autres avantages et caractéristiques de l'invention apparaîtront à la lecture de la description qui suit d'un exemple de réalisation nullement limitatif en se référant au dessin annexé dans lequel :
- la figure 1 illustre, partiellement en coupe, un connecteur selon l'invention,
- la figure 2 est une vue de détail en coupe de la zone de connexion du connecteur de la figure 1, et
- la figure 3 est une vue en coupe du manchon à cloison utilisé dans le connecteur selon l'invention, avant sa mise en place.

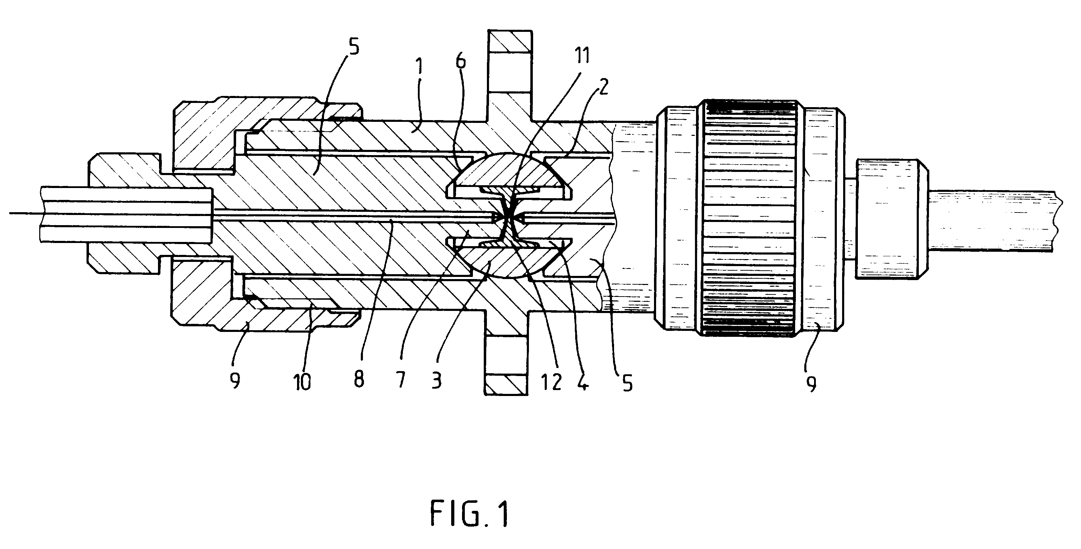

Le connecteur illustré sur la figure 1 comporte les caractéristiques générales des connecteurs commercialisés par la société déposante sous la marque OPTABALL et décrits notamment dans EP-A-0063085 auquel on pourra se référer pour plus de détails.

Le connecteur comporte un raccord femelle de reconstitution 1 comportant un perçage longitudinal 2 à l'intérieur duquel est fixée une sphère 3 munie d'un orifice axial traversant 4, et dans lequel sont introduits deux embouts mâles 5 présentant chacun une portée conique 6 venant en appui contre la sphère 3 et une protubérance axiale 7 à l'intérieur de laquelle est immobilisée une fibre optique 8.

Des écrous taraudés 9, coopérant avec des filetages 10 réalisés aux extrémités longitudinales du raccord 1, constituent des moyens de pression longitudinaux repoussant axialement chacun des embouts en direction de l'autre.

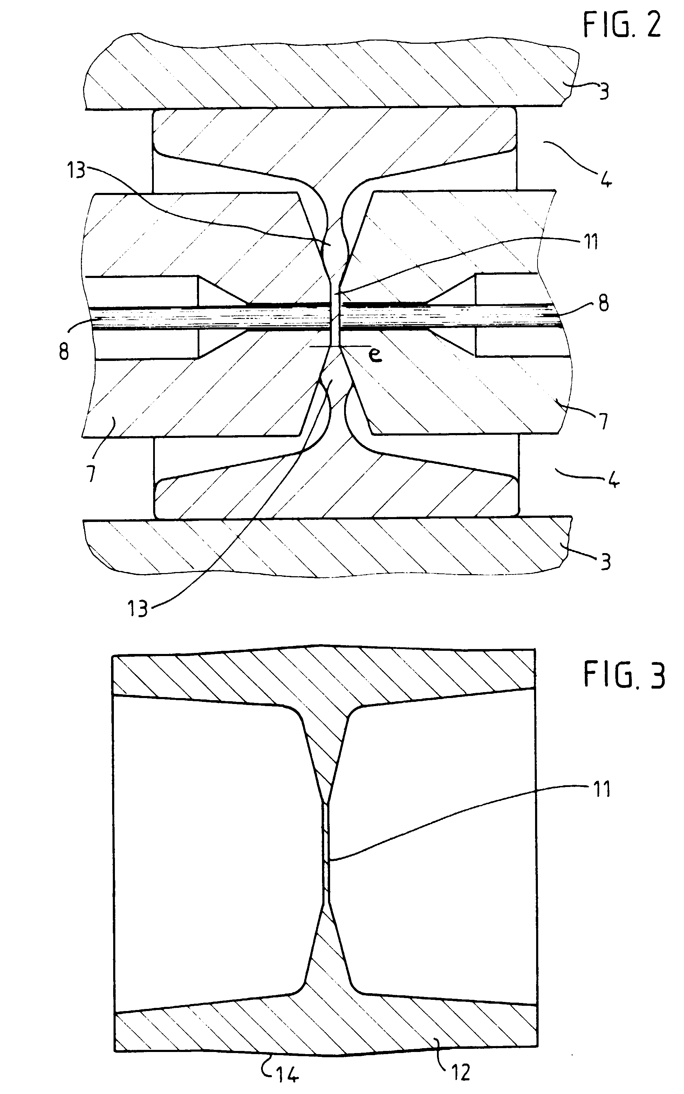

Selon l'invention, on met en place, au lieu du gel d'indice conventionnellement utilisé entre les extrémités des protubérances 7 des embouts mâles 5, une membrane 11 en matière plastique élastique, notamment en élastomère silicone, cette membrane étant réalisée d'un seul tenant avec un manchon 12 illustré avant montage sur la figure 3 et que l'on voit le mieux dans la position de connexion en se référant à la figure 2.

Dans un mode de réalisation particulier, on utilise un élastomère silicone présentant un indice de réfraction de 1,41 environ, la membrane 11 avant montage présentant à titre d'exemple une épaisseur d'environ 20 µm.

Lors de la connexion et dans la mesure où l'écartement e (figure 2) entre les faces d'extrémité en regard des protubérances 7 des embouts mâles est inférieur à cette valeur, par exemple compris entre 6 et 15 µm, les embouts mâles repoussés axialement sous l'effet de la rotation des écrous 9 sont amenés à comprimer la membrane 11, comme on le voit sur la figure 2, formant ainsi au-delà de la partie en forme de disque située entre les faces d'extrémité en regard des protubérances, un bourrelet circulaire 13 qui offre l'avantage de réaliser une barrière de protection vis-à-vis de polluants extérieurs qui sont ainsi efficacement empêchés de parvenir dans la zone de raccordement des fibres.

Comme on le voit sur la figure 3, la paroi extérieure 14 du manchon 12 présente, au voisinage de sa partie centrale, une section longitudinale convexe biconique, ce qui permet de monter, à emmanchement dur, le manchon 12 dans son conduit de réception dans le raccord de reconstitution, à savoir, dans l'exemple illustré, l'orifice axial traversant 4 du corps de butée sous forme de sphère 3.

En cas de détérioration accidentelle du manchon 12, on peut facilement, après dégagement des embouts, retirer le manchon 12 comportant la membrane 11 et le remplacer sans nécessiter d'opérations de nettoyage des embouts comme cela était le cas avec les gels d'indice traditionnels.

Dans l'exemple illustré, les faces d'extrémité en regard des embouts et des fibres sont perpendiculaires à l'axe du connecteur.

On peut naturellement mettre en oeuvre l'invention avec des embouts et des fibres présentant des faces d'extrémité inclinées, par exemple d'un angle de 11 à 15° par rapport à un plan perpendiculaire à l'axe du connecteur en vue de réaliser une atténuation ou de diminuer le coefficient de réflexion.

Les essais effectués par la société déposante montrent que dans tous les cas les pertes à la connexion constatées en mettant en oeuvre une membrane au sens de l'invention sont sensiblement les mêmes que celles constatées lors l'utilisation d'un gel d'indice présentant le même indice de réfraction, et notablement inférieures aux pertes et aux coefficients de réflexion constatés lorsqu'une lame d'air est présente entre les faces d'extrémité des fibres en regard.

Bien que l'invention ait été décrite en laison avec un mode de réalisation particulier, il est bien évident qu'elle n'y est nullement limitée et qu'on peut lui apporter différentes variantes et modifications sans pour autant sortir ni de son cadre ni de son esprit. En particulier, il doit être clair que l'invention n'est pas limitée aux moyens décrits dans l'exemple (sphère dans le raccord femelle et portées coniques sur les embouts) pour réaliser un positionnement des embouts lors de la connexion

## Revendications

1. Connecteur pour fibres optiques comportant : deux embouts (5) montés chacun à l'extrémité de l'une des fibres (8) à connecter et comportant chacun un conduit dans lequel la fibre optique correspondante est introduite à jeu et immobilisée de manière que sa face terminale coïncide avec la face terminale de l'embout ; un raccord femelle de reconstitution (1) comportant un perçage longitudinal (2) pour supporter et aligner les deux embout face à face ; des moyens de pression longitudinaux (9,10) pour repousser chacun des embouts en direction de l'autre ; et un élément (11) en matière plastique élastique présentant un indice de réfraction égal à/ou voisin de celui du coeur des fibres (8) à connecter ledit élément étant logé dans ledit perçage longitudinal pour être comprimé par lesdits embouts lorsque ceux-ci sont repoussés l'un vers l'autre, ledit élément présentant avant la mise en place des embouts une épaisseur supérieure à l'écartement (e) entre les extrémités des fibres en regard une fois la connexion réalisée, caractérisé par le fait que ledit élément (11) est constitué par une membrane réalisée d'un seul tenant avec, et dans un manchon (12) positionné et immobilisé dans ledit perçage longitudinal.

2. Connecteur selon la revendication 1, caractérisé par le fait que la membrane (11) est réalisée en élastomère silicone.

3. Connecteur selon l'une des revendications 1 et 2, caractérisé par le fait que la paroi extérieure (14) dudit manchon (12) présente une section convexe, incurvée ou biconique.

4. Connecteur selon l'une quelconque des revendication 1 à 3, caractérisé par le fait qu'il comporte un corps de butée logé dans le perçage longitudinal du raccord femelle et comportant un orifice axial traversant dans lequel sont introduites des protubérances réalisées aux extrémités des embouts et avec la face terminale desquelles coïncident les faces terminales des fibres.

5. Connecteur selon la revendication 4, caractérisé par le fait que ledit manchon (12) est monté à emmanchement dur dans ledit orifice axial (4) dudit corps de butée (3).

## Patentansprüche

1. Verbinder für optische Fasern mit: zwei Endhülsen (5), die jeweils am Ende einer der zu verbindenden Fasern (8) montiert sind und jeweils einen Kanal aufweisen, in dem die entsprechende optische Faser mit Spiel eingeführt und derart fixiert ist, daß ihre Endfläche mit der Endfläche der Endhülse bündig ist, einer Kupplungsbuchse (1) mit einer Längsbohrung (2) zur endweisen Abstützung und Ausrichtung der beiden Endhülsen, Longitudinal-Andruckmitteln (9, 10) zum Vorspannen jeder der Endhülsen in Richtung der anderen, und einem Element (11) aus elastischem Kunststoff, der einen Brechungsindex gleich oder in der Nähe desjenigen der Seele der zu verbindenden Fasern (8) aufweist, welches Element in der genannten Längsbohrung untergebracht ist, um durch die Endhülsen komprimiert zu werden, wenn diese gegeneinander gespannt werden, wobei das genannte Element vor der Anbringung der Endhülsen eine Dicke aufweist, die größer ist als der Abstand (e) zwischen den gegenüberliegenden Enden der Fasern, nachdem die Verbindung einmal hergestellt ist, dadurch gekennzeichnet, daß das genannte Element (11) durch eine Membran gebildet wird, die in einem Stück mit und in einer Hülse (12) ausgebildet ist, die in der genannten Längsbohrung positioniert und gehalten ist.

2. Verbinder nach Anspruch 1, dadurch gekennzeichnet, daß die Membran (11) aus einem Silikon-Elastomer hergestellt ist.

3. Verbinder nach Anspruch 1 oder 2, dadurch gekennzeichnet, daß die Außenwand (14) der genannten Hülse (12) einen konvexen, gekrümmten oder doppelkegelförmigen Schnitt aufweist.

4. Verbinder nach einem der Ansprüche 1 bis 3, dadurch gekennzeichnet, daß er einen Anschlagkörper aufweist, der in der Längsbohrung der Kupplungsbuchse untergebracht ist und eine axial durchgehende Öffnung aufweist, in welche Vorsprünge eingeführt sind, die an den Enden der Endhülsen ausgebildet sind und mit deren Endfläche die Endflächen der Fasern bündig sind.

5. Verbinder nach Anspruch 4, dadurch gekennzeichnet, daß die genannte Hülse (12) im Preßsitz in der genannten axialen Öffnung (4) des Anschlagkörpers (3) montiert ist.

## Claims

1. Connector for optical fibres comprising: two terminals (5) mounted one at each end of one of the fibres (8) to be connected and each comprising a conduit in which the corresponding optical fibre is introduced with play and immobilized such that its end coincides with the end of the terminal; a female connecting joint (1) comprising a longitudinal bore (2) to support and align the two terminals end to end; means of longitudinal pressure (9, 10) to push each terminal in the direction of the other; and an element (11) of elastic plastic material with an index of refraction equal to/or close to that of the core of the fibres (8) to be connected, the said element being housed in the said longitudinal bore in order to be compressed by the said terminals when these are pushed towards each other, the said element having, before positioning of the said terminals, a thickness greater than the distance (e) between the extremities of the fibres meeting when the connection is made, characterized in that the said element (11) consists of a membrane made of one piece with and in a sleeve (12) positioned and immobilized in the said longitudinal bore.

2. Connector according to claim 1, characterized in that the membrane (11) is made of silicon elastomer.

3. Connector according to any of claims 1 and 2, characterized in that the external wall (14) of the said sleeve (12) has a convex, inwardly curved or biconical section.

4. Connector according to any of claims 1 to 3, characterized in that it comprises a bearing body housed in the longitudinal bore of the female joint and consisting of a transverse axial orifice into which are introduced protuberances on the extremities of the terminals and the ends of which coincide with the ends of the fibres.

5. Connector according to claim 4, characterized in that the said sleeve (12) is mounted to sit firmly in the said axial orifice (4) of the said bearing body (3).
